# EUROPEAN PATENT SPECIFICATION

(11) **EP 4 482 138 B1**
(45) Date of publication and mention of the grant of the patent: **04.03.2026**
(21) Application number: 23214645.6
(22) Date of filing: 06.12.2023
(51) Int. Cl.: H04N 9/31

(54) **DISPLAY APPARATUS AND METHOD FOR DISPLAYING PIXELS OF AN IMAGE**
ANZEIGEVORRICHTUNG UND VERFAHREN ZUM ANZEIGEN VON PIXELN EINES BILDES
APPAREIL D'AFFICHAGE ET MÉTHODE D'AFFICHAGE DES PIXELS D'UNE IMAGE

(30) Priority: 22.06.2023 EP 23180876; 22.06.2023 EP 23180877; 08.09.2023 EP 23196195
(43) Date of publication of application: 25.12.2024
(73) Proprietor: TriLite Technologies GmbH, 1040 Wien (AT)
(72) Inventor: MAIER, Franz Josef, 9210 Pörtschach am Wörthersee (AT); PRASAD, Adarsh Shankar, 1030 Wien (AT); SCHMID, Gerhard, 3844 Waldkirchen (AT); NASSAR, Faraj, 1210 Wien (AT); DORFMEISTER, Manuel, 7203 Wiesen (AT); REITTERER, Joerg, 2345 Brunn am Gebirge (AT)
(74) Representative: Weiser Voith Gugler Patentanwälte Partnerschaft

(56) References cited:
- WO-A1-2019/143525
- WO-A1-2022/100847
- CN-A- 109 752 839
- US-A1- 2010 208 148
- US-A1- 2012 127 184

## Description

The present invention relates to a display apparatus comprising a light source configured to emit a light beam, a pulse generator configured to generate a pulse train having a pulse rate, a buffer configured to store pixels of an image, a controller configured to receive the pulse train and the stored pixels, to modulate the pulse train in pulse amplitude and/or pulse width according to the pixels, and to drive the light source according to the modulated pulse train, a mirror assembly with one or more mirrors configured to oscillate and scan the light beam over an image area according to a scan pattern, and a mirror driver configured to drive the mirror assembly according to said scan pattern. The present invention further relates to a method for displaying pixels of an image.

Display apparatus of this kind are commonly used in virtual reality (VR) or augmented reality (AR) glasses, helmets or head-up displays (HUDs) for a broad range of applications like navigation, training, entertainment, education or work. A pulse generator provides a pulse train to a controller that modulates the pulse train in amplitude and/or width according to pixels of an image (frame) that are stored in a buffer and successively fed to or retrieved by the controller. According to the modulated pulse train, the controller drives a light source to emit a mono- or multicoloured light beam which carries the image onto a mirror assembly having one or more moving micro-electro-mechanical-system (MEMS) mirrors driven by a mirror driver. The mirror assembly has, e.g., one MEMS mirror oscillating about two axes or two MEMS mirrors each oscillating about a respective axis, to deflect the light beam into subsequent directions (angles) towards an image area, one direction (angle) per pixel of the image to scan the light beam over the image area in order to display the pixels. In VR applications, the image area is typically a (miniature) reflective screen in front of the user's eye. In AR applications the image area is a semi-transparent combiner which redirects the visible light beam towards the user's eye while concurrently superposing it with a light field from a surrounding. In head mounted displays the mirror assembly may even deflect the scanned visible light beam directly into the user's eye, without any reflective screen or semi-transparent combiner.

To adapt the display apparatus to variable ambient lighting conditions or users' preferences, the brightness of the light beam is adjusted, in dependence on a brightness signal measured by an ambient light sensor or provided by user input. Typically, the amplitude of the pulse train is scaled to set the brightness of the display.

However, scaling an electric current for driving the light source to set the brightness level of the display may reach two limits when going to low brightness levels. Firstly, the electric current resolution may not suffice to represent all different colour values at some point. Assuming, e.g., an electric current resolution of 10 µA of current laser drivers, downscal-ing the maximum pulse amplitude to 2 mA would not allow to represent 256 different colour values, as these would require a maximum pulse amplitude of 256 • 10 µA = 2,56 mA, but only about 200 colour values (200 • 10 µA = 2 mA). Reducing display brightness may thus decrease colour depth, impairing image quality. Secondly, driving a laser light source at a low electric current may push it below a threshold for lasing, where stimulated emission is inhibited, resulting in a lower lasing efficiency, light beam and image quality.

WO 2019/143525 A1 discloses a scanned-beam display which is configured to illuminate different pixels of an image with light pulses of different lengths, wherein peripheral pixels may be illuminated by a high number of light pulses of short lengths to reduce image flickering. CN 109 752 839 A describes a display control device with a central processing unit that arranges the pixels of the image according to a scan pattern, stores the arranged pixels to a memory and synchronises a linear pixel retrieval from the memory. A method for interleaving sub-frame images is known from US 2010/0208148 A1.

It is an object of the present invention to provide a display apparatus and a method which allow for displaying an image with a high quality even at low brightnesses.

In a first aspect of the invention this object is achieved with a display apparatus as specified at the outset, wherein the pulse generator is configured to receive a brightness signal from an ambient light sensor or a user operated brightness control and to generate the pulse train with a low pulse rate when the brightness signal indicates a low brightness and with a high pulse rate when the brightness signal indicates a high brightness, in order to adapt the display apparatus to variable ambient lighting conditions or user preferences.

The invention breaks with the paradigm of adjusting the display brightness via an amplitude scaling of the pulse train and utilises the pulse rate of the pulse train for brightness adjustment. To this end, the pulse generator receives, from an ambient light sensor or a user-operated brightness control, the brightness signal indicating the desired brightness and switches the pulse rate between a low pulse rate for a low indicated brightness and a high pulse rate for a high indicated brightness and, optionally, one or more further intermediate pulse rates for intermediate brightness/es.

Utilising the pulse rate for brightness adjustment has several advantages. As the maximum amplitudes of the pulses need not be altered for brightness control the full amplitude range can be used for the desired grayscale or colour space. Even at low brightness a high quality image can be obtained. Moreover, decreasing the pulse rate for low brightness also decreases the rate of retrieving the pixels from the buffer and any image memory upstream of the buffer, reducing buffer, controller and processing loads. Furthermore, the inventive display apparatus saves energy at low brightness levels not only by emitting less light, but also by reducing necessary processing power. Finally, an electric current for laser driving can be maintained above the lasing threshold, preserving lasing efficiency, light beam quality and hence image quality.

The scan pattern may be a non-raster scan pattern, e.g., a spiral pattern, or even a raster scan pattern. In a beneficial embodiment the scan pattern is a Lissajous pattern, which allows to exploit resonances of the mirrors of the mirror assembly and, hence, to achieve higher speeds of the light beam and higher frame rates with low driving powers.

The synchronisation of the pixel retrieval with the mirror assembly position may be established in many ways. The invention provides for at least two advantageous embodiments.

In a first advantageous embodiment the controller or the buffer is configured to receive a current position of the mirror assembly within the scan pattern from the mirror driver and to retrieve that stored pixel that corresponds to the current position from the buffer for modulating. Thereby, the mirror driver provides the current mirror position within the scan pattern, e.g., within the Lissajous pattern, to the controller or buffer which then identifies the currently needed pixel for the indicated mirror position and retrieves that pixel for modulating. This setup ensures that the pixel used by the controller matches the current MEMS mirror position irrespective of the current pulse rate. Moreover, decreasing the pulse rate for low brightnesses allows the mirror assembly to provide the current position less often while still achieving a tight synchronisation of the pixel retrieval with the mirror assembly position.

In a second advantageous embodiment the display apparatus further comprises a processor configured to hold the image in a memory, to determine a sequence of pixels of the image to be successively displayed according to said scan pattern, and to transfer said sequence of pixels in one or more successive segments to the buffer for storing. Thereby, time-critical real-time components like the mirror driver, the controller and the buffer that need to be exactly synchronised to one another are separated from the processor that may only be loosely synchronised to the real-time components. The processor thus has valuable headroom or "slack" for the task of determining the play-out-order of the pixels and transferring the pixels in that order to the buffer. The buffer receives the pixels from the processor already in the correct order, i.e. as they are to be played out according to the scan pattern. The buffer pixels can, thus, be retrieved with a fast sequential contiguous ("linear") buffer access and quickly. Furthermore, as the buffer stores the pixels in the correct order the pixel retrieval need not be synchronised each time a new pixel is to be played-out but, e.g., only when the play-out of several pixels (a "batch" of pixels) shall be (re-)synchronised to the mirror assembly position. Hence, the mirror assembly may send an optional synchronisation or trigger signal less often, obviating the need for a frequent processing of synchronisation signals and identifying scattered memory addresses when retrieving the pixels from the buffer. The pixels can be retrieved at a higher rate, and the display apparatus is capable to display images with a higher resolution and/or frame rate.

The loose synchronisation of the processor to the real-time components may be established in many ways. For instance, the processor may be synchronised by the mirror driver when the mirror assembly is in a given position, by the buffer when its filling level falls below a predetermined threshold, etc. Preferably, the transferring of said segment/s is triggered by each l-th pulse of the pulse train. In this way, the pulse generator serves as a "system clock" triggering both the pixel transfer (every l-th pulse) and retrieval (every pulse) and, thus, synchronising the time-critical components to the processor. Thereby, decreasing the pulse rate for low brightness automatically results in lowering the retrieval and transferring rate and, due to the latter, in more time available for the processor to determine the sequence of pixels. Thus, at a low brightness, the processor, the pulse generator, the buffer and the controller are less busy and the display apparatus requires even less electric power.

In a further embodiment the processor is configured to determine the sequence of pixels in successive parts. In this way, the processor determines the pixels of the sequence of pixels at several instances of time, e.g., one part every k-th clock cycle of the processor or every l-th pulse of the pulse train. Hence, between each two of those instances the processor may perform other tasks like adapting the pixels of the image to dynamically correct for geometrical distortions, e.g., due to a change in image area geometry. To this end, each part comprises preferably at least one segment such that pixels of a determined part may be promptly transferred to the buffer, e.g., within the same or the next processor clock cycle of its determination.

The processor may determine the sequence of pixels based on an on-the-fly calculation of the scan pattern. For a particularly fast determination the processor is preferably configured to store a look-up table of indices of the pixels to be successively displayed according to said scan pattern and to determine the sequence of pixels by retrieving the pixels according to the look-up table from the memory. The processor can easily and quickly determine the sequence of pixels by accessing the look-up-table to obtain the indices of the pixels and then the memory to retrieve the pixels according to the indices.

In a favourable embodiment the high pulse rate is at least twice of the inverse of the shortest duration of stay of the light beam in one pixel of said image when scanning the light beam according to the scan pattern. Employing such a high pulse rate guarantees that each pixel of the image, including the pixel with the shortest duration of stay of the light beam, is displayed by at least two successive pulses. This creates the necessary headroom that at low pulse rates each pixel of the image may be displayed by at least one pulse, preserving image resolution at low brightnesses.

On the other hand, the low pulse rate may be less than the inverse of the shortest duration of stay of the light beam in one pixel of said image when scanning the light beam according to the scan pattern, leading to intentionally left out pixels ("holes") within one run of the scan pattern. This allows for particularly low brightnesses and a particularly low power consumption, albeit at the cost of image resolution.

Image resolution can, however, be preserved when the pixels are interlaced over successive runs of the scan pattern. To this end, in a preferred variant of this embodiment the low pulse rate is an m-th of the inverse of the duration of stay of the light beam in one pixel of said image when scanning the light beam according to the scan pattern, and m successive sections of the pulse train each containing pulses of a respective scan of the scan pattern are mutually offset in time with respect to the beginning of the respective scan of the scan pattern by an integer multiple n of an m-th of the inverse of the low pulse rate, n modulo m being unequal to zero. In this variant, every m-th pixel traversed by the light beam is displayed within each scan ("run") of the scan pattern, and the mutual time offset of the m sections guarantees that each scan and section displays different pixels. The pixels of different scans of the scan pattern are then interlaced and the image is completed at full resolution after m runs of the scan pattern, all that with a particularly low brightness and full greyscale or colour space. Of course, when the duration of stay of the light beam in one pixel varies within one run of the scan pattern, i.e., when the light beam spends a different amount of time in different pixels, the low pulse rate may vary accordingly to achieve the m-fold interlacing.

This variant may advantageously be combined with the above-mentioned processor when the latter is further configured to transfer at least one segment per scan of the scan pattern. Each segment may then comprise, e.g., all, a half, a third, etc. of the pixels for the modulation of the current or following section of the pulse train. The buffer may store only the pixels of one, two, three, etc. small segments and, hence, be particularly small and fast accessible. Optionally, the processor may also determine the sequence section-wise such that each of the above-mentioned parts corresponds to one section of the pulse train or a unit fraction thereof.

In some embodiments the image may be displayed by a mono-coloured light beam. For displaying a multi-coloured image in preferred embodiments each pixel has two or more colours, preferably the colours red, green and blue, the light source comprises for each of said colours a sub-light source configured to emit a respective sub-light beam of the respective colour, and the controller is configured to perform said modulating and driving separately for each of said colours.

In a second aspect the invention provides a method for displaying pixels of an image.

For further advantages and advantageous embodiments of the method, reference is made to the advantages and embodiments described above with respect to the display apparatus of the invention.

The invention will now be described by means of exemplary embodiments thereof with reference to the enclosed drawings, in which show:
Fig. 1 a display apparatus according to the invention in the process of displaying an image on an image area in a schematic perspective view;
Fig. 2 a first embodiment of the display apparatus of Fig. 1 in a schematic circuit diagram;
Fig. 3a an exemplary pulse train occurring in the display apparatus of Figs. 1 and 2, having a high pulse rate within a first time interval and a low pulse rate within a second time interval, in a time diagram;
Figs. 3b and 3c the light pulses resulting from the pulse train of Fig. 3a on the image area within the first time interval (Fig. 3b) and the second time interval (Fig. 3c);
Fig. 4 a second embodiment of the display apparatus of Fig. 1 in a schematic circuit diagram;
Figs. 5a and 5b another example of a pulse train occurring in the display apparatus of Figs. 1, 2 and 4 during a first scan of the scan pattern (Fig. 5a) and a subsequent second scan of the scan pattern (Fig. 5b) in respective time diagrams;
Fig. 5c the light pulses resulting from the pulse train of Figs. 5a and 5b on the image area;
Fig. 6 an exemplary determination of a sequence of pixels used for modulating the pulse train of Figs. 5a and 5b in a schematic diagram; and
Fig. 7 a method according to the invention that is carried out by the display apparatus of Figs. 1, 2 and 4 in a flow diagram.

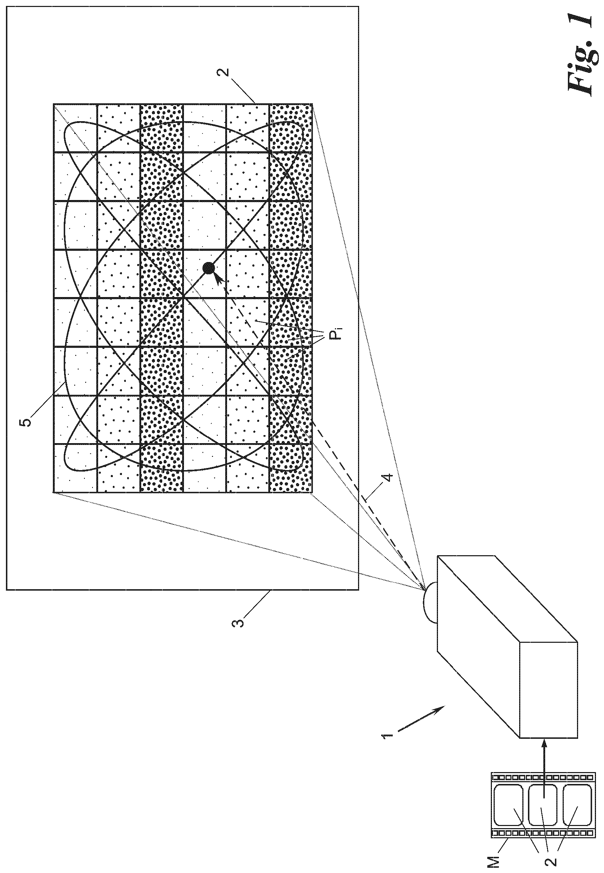

Fig. 1 shows a display apparatus 1 displaying an image 2 onto a wall 3 by scanning the wall 3 with a pulsed light beam 4 according to a scan pattern, here: a Lissajous pattern 5, to draw, one after the other, pixels Pᵢ of the image 2. The image 2 may have a pixel resolution according to a conventional image or video standard, e.g., full HD (1920 x 1080 pixels), UHD (3840 x 2160 pixels), 4K (4096 x 2160 pixels) etc., and the scan pattern may densely cover the pixels Pᵢ; however, for illustrational purposes an image 2 with only few pixels Pᵢ and a simple, coarse Lissajous pattern 5 have been shown in Fig. 1. Instead of the Lissajous pattern 5 shown, the scan pattern may be any other non-raster scan pattern, e.g., a spiral pattern, or even a raster scan pattern.

The image 2 may be part of a movie M, be a single image, e.g., a photo to be displayed for a longer period of time, part of a larger image, etc. Instead of a wall 3, the display apparatus 1 could display the light beam 4 onto any kind of image area, such as a board, projection screen, poster, the retina of an eye, an augmented reality (AR) combiner waveguide, another combiner optics, or the like. Accordingly, the display apparatus 1 may be part of a projector, AR or VR (virtual reality) glasses, a helmet, a head-up display, etc.

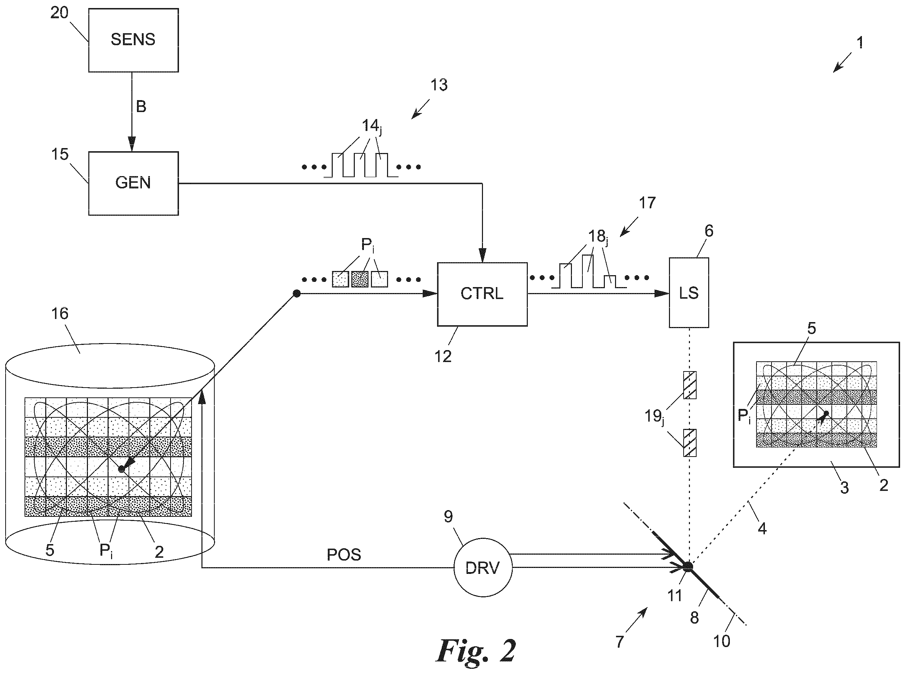

With reference to Figs. 1 and 2, the display apparatus 1 has a light source 6 emitting the light beam 4 and a mirror assembly 7 with one or more (here: one) micro-electro-mechanical-system, MEMS, mirrors 8 for deflecting the emitted light beam 4 towards the wall 3. The MEMS mirror 8 is driven by a mirror driver 9 to oscillate about a horizontal axis 10 with a horizontal oscillation period Tₕ and about a vertical axis 11 with a vertical oscillation period Tᵥ, in order to deflect the emitted light beam 4 towards the wall 3 according to said Lissajous pattern 5. As the oscillation of the MEMS mirror 8 determines the deflection pattern, i.e. the Lissajous pattern 5, both the oscillation and the deflection are carried out according to one and the same Lissajous pattern 5.

The mirror assembly 7 may either comprise one MEMS mirror 8 oscillating about the horizontal and vertical axes 10, 11 or two MEMS mirrors 8, one after the other in the optical path of the light beam 4, each of which MEMS mirrors 8 then oscillating about one of the horizontal and vertical axes 10, 11.

Depending on the Lissajous pattern 5 to be displayed, Tₕ and Tᵥ may be chosen such that the trajectory of the light beam 4 on the image plane 2 densely covers the entire image plane 2 during a period T_{fr} of one image frame 2. Such a "complex" or "dense" Lissajous pattern 5 can be achieved when the frequencies fₕ = 1/Tₕ, fᵥ = 1/Tᵥ are greater than the frame rate f_{fr} = 1/T_{fr}, e.g., greater than 1 kHz or tens of kHz, and the beginnings of their respective oscillation periods meet, e.g., only over every one or more images 2, in particular when the frequencies fₕ, fᵥ are close to each other. To this end, frequencies fₕ, fᵥ with a small greatest common divisor, e.g. smaller than 10, may be employed, for example.

The light source 6 may be any light source known in the art, e.g., an incandescent lamp, a gas, liquid or solid laser, a laser diode, a vertical-cavity surface-emitting laser (VCSEL), an LED, an SLED, etc. The light source 6 is driven by a controller 12 according to the pixels Pᵢ of the image 2. To this end, the controller 12 receives, on the one hand, a train 13 of pulses 14ⱼ that is generated by a pulse generator 15 of the display apparatus 1, and, on the other hand, the pixels Pᵢ of the image 2 that are stored in a buffer 16 of the display apparatus 1. The controller 12 may receive the stored pixels Pᵢ either by retrieving the pixels Pᵢ itself from the buffer 16, e.g. when the controller 12 is part of the buffer 16, or by obtaining them from a buffer controller, e.g. when the controller 12 is separate from the buffer 16. The pixel retrieving is synchronised with the pulses 14ⱼ of the pulse train 13.

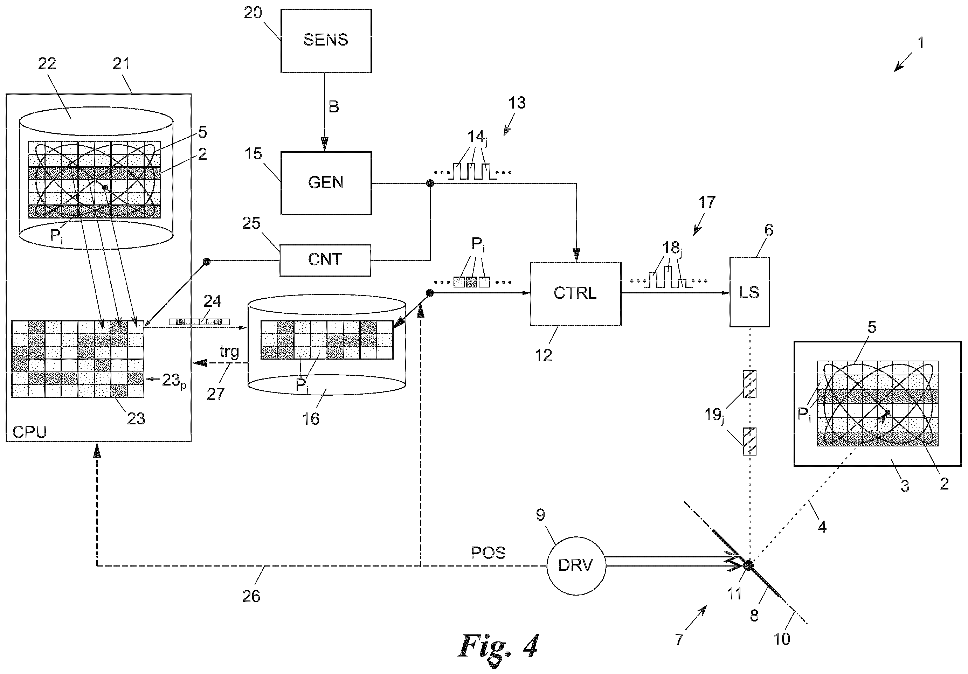

To synchronise the pixel retrieving with the mirror movement, in the embodiment of Fig. 2 the mirror driver 9 provides once or repetitively a current position POS of the mirror assembly 7 within the scan pattern 5 indicating the current pixel Pᵢ to be retrieved to the controller 12 or buffer controller. Alternatively, the pixels Pᵢ may already be stored in the buffer 16 in the correct play-out order as described below with reference to the embodiment of Fig. 4.

According to the received pixels Pᵢ, i.e. according to the colour of each received pixel Pᵢ, the controller 12 modulates the pulse train 13 in pulse amplitude A (Figs. 2, 3a, 5a and 5b), in pulse width (not shown) or in both (not shown), to obtain a modulated train 17 of pulses 18ⱼ. The controller 12 drives the light source 6 with the modulated train 17 to emit one light pulse 19ⱼ per electric pulse 18ⱼ of the modulated train 17. Hence, each light pulse 19ⱼ encodes one colour of one pixel Pᵢ.

In case the light source 6 displays a mono-colour, black and white, or grey scale image 2 with a mono-coloured light beam 4, each pixel Pᵢ comprises a single colour, e.g., a brightness or intensity value, and the controller 12 drives the light source 6 according to one modulated train 17. In case the light source 6 displays a multi-colour image 2 with a multi-coloured light beam 4 having a sub-light beam emitted by a sub-light source for each colour, each pixel Pᵢ comprises several colours, e.g., RGB values indicating the brightness or intensity of a red, green, and blue colour, YPbPr values, etc., and the controller 12 drives each sub-light source according to a respective modulated train 17 (not shown).

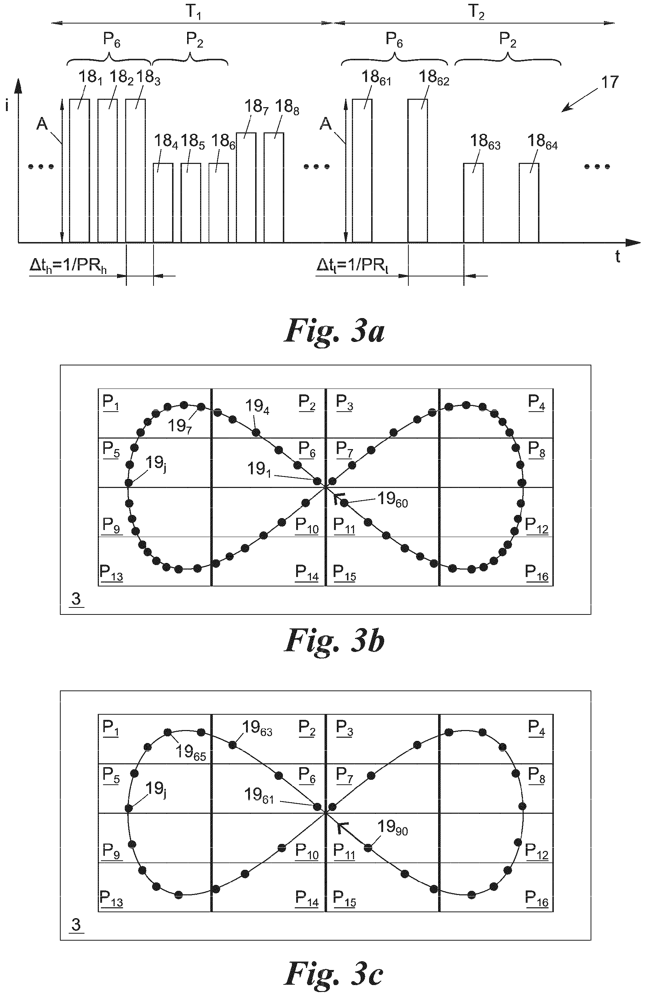

The display apparatus 1 utilises the pulse rate PR, i.e. the inverse pulse time spacing Δt, also known as "pulse repetition rate" or "pulse frequency", employed by the pulse generator 15 when generating the pulse train 13 to adjust the brightness of the pixels Pᵢ displayed on the image area 3. The pulse rate PR may be uniform throughout one scan of the scan pattern 5, or varying locally to account for unequal mirror velocities within the scan pattern 5 and thus durations of stay of the light beam 4 in different pixels Pᵢ of the image 2. With reference to Figs. 2 and 3a - 3c such a brightness adjustment shall now be described.

As can be seen in Fig. 2 the pulse generator 15 receives a brightness signal B, from an ambient light sensor 20 or from a user-operated brightness control. Depending on the brightness indicated in the brightness signal B, the pulse generator 15 generates the pulse train 13 to have a low pulse rate PRₗ for a low indicated brightness or a high pulse rate PRₕ for a high indicated brightness.

In the example of Figs. 3a - 3c the pulse generator 15 receives a brightness signal B indicating a high brightness at the beginning of a first time interval T₁. Hence, the train 13 of pulses 14ⱼ is generated and the train 17 of pulses 18ⱼ is modulated to have a high pulse rate PRₕ (Fig. 3a: left time interval T₁). Fig. 3b depicts the pulses 19₁ - 19₆₀ of the light beam 4 on the image area 3 resulting from the pulses 18₁ - 18₆₀ of Fig. 3a with the high pulse rate PRₕ when the first time interval T₁ exemplarily lasts for one scan ("run") of the light beam 4 over the scan pattern 5, i.e. for one scan of the scan pattern 5. As can be seen, the density of the light pulses 19₁ - 19₆₀ on the image area 3 is high such that the image 2 is displayed at the desired high brightness indicated in the brightness signal B.

After the first interval T₁ has lapsed in the example of Figs. 3a - 3c the pulse generator 15 receives a brightness signal B indicating a low brightness at the beginning of a second time interval T₂. Now, the train 13 of pulses 14ⱼ is generated and the train 17 of pulses 18ⱼ is modulated to have a low pulse rate PRₗ. Fig. 3c depicts the pulses 19₆₁ - 19₉₀ of the light beam 4 on the image area 3 resulting from the pulses 18₆₁ - 18₉₀ of Fig. 3a with the low pulse rate PRₗ when the second time interval T₂ exemplarily also lasts for one scan of the scan pattern 5. As can be seen, the density of the light pulses 19₆₁ - 19₉₀ is low such that the image 2 is displayed on the image area 3 at the desired low brightness indicated in the brightness signal B.

Comparing the amplitudes A, e.g., of the pulses 18₁ and 18₆₁ used for displaying pixel P₆, it is apparent that the amplitudes need not be reduced to achieve the low brightness (albeit they could, e.g. for further brightness reduction). Consequently, the full possible range of amplitudes A may be utilised to display pixel colours.

In the example of Figs. 3a - 3c the high pulse rate PRₕ is at least two times and the low pulse rate PRₗ at least one time of the inverse of the shortest duration of stay of the light beam 4 in the pixel with the shortest duration of stay among all pixels Pᵢ (here: the pixel P₆). Then all of the pixels Pᵢ are displayed by at least two light pulses 19ⱼ at the high pulse rate PRₕ (Fig. 3b), generating a "headroom" for displaying all of the pixels Pᵢ still by at least one light pulse 19ⱼ when a low pulse rate PRₗ (Fig. 3c) is applied.

Of course, other values of the high and/or low pulse rates PRₕ, PRₗ may be chosen, e.g., as detailed below. Moreover, depending on the required brightness granularity the pulse generator 15 may generate the train 13 with one or more intermediate pulse rates PRᵢ when the brightness signal B indicates a respective intermediate brightness.

Fig. 4 depicts a further embodiment of the display apparatus 1 which additionally comprises a processor 21 for supplying the buffer 16 with the pixels Pᵢ in the correct order, i.e. as they are to be displayed according to the scan pattern 5. The processor 21 holds the image 2 in a memory 22, e.g., an SRAM or DRAM memory, which may be part of the processor 21 or external therefrom, and transforms the image 2, whose pixels Pᵢ are not ordered according to the scan pattern 5, to a pixel sequence 23 whose pixels Pᵢ are ordered according to the scan pattern 5. The processor 21 transfers the pixel sequence 23 in one or more segments 24 to the buffer 16 for storing. Then the controller 12 or said buffer 16 retrieves - e.g. synchronised by the pulse train 13 - the stored pixels Pᵢ successively for modulating. To this end, the buffer 16 may optionally be a first-in first-out (FIFO) buffer. Hence, in this embodiment the mirror driver 9 may provide the synchronisation signal POS not at all or less often to loosely synchronise the pixel retrieval to the mirror movement.

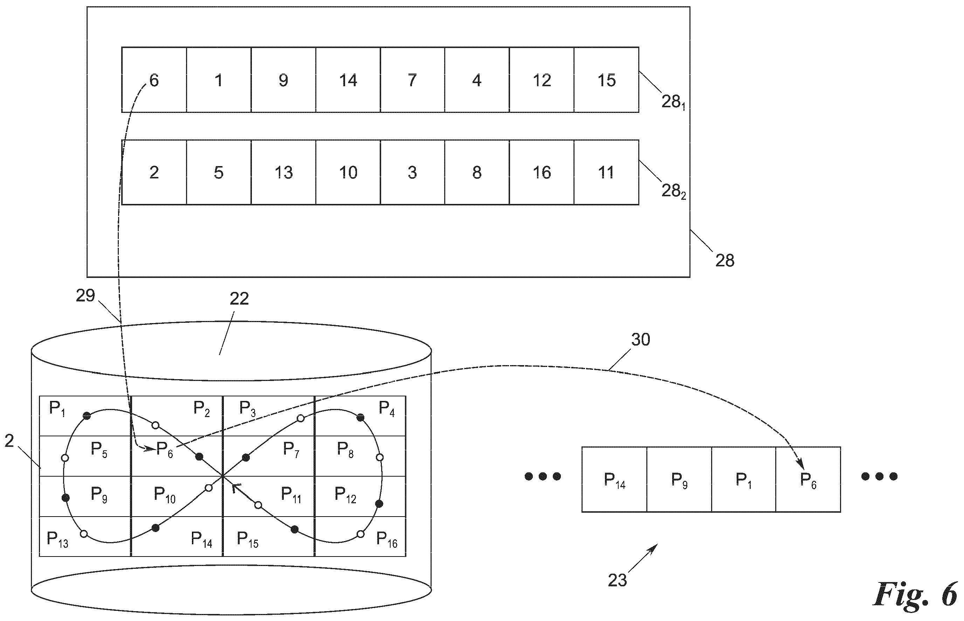

The processor 21 may determine the sequence 23 of pixels Pᵢ in any time granularity, e.g., for each image 2 at once or successively in subsequent parts 23₁, 23₂, ..., generally 23ₚ. Each part 23ₚ may comprise one or more segments 24. Moreover, the processor 21 may determine the sequence 23 in many ways, e.g., on-the-fly by matching positions that follow each other in time along the scan pattern 5 to pixels Pᵢ in the image 2 occurring at these positions, or by means of a look-up table as described below with reference to Fig. 6.

The transfer of the segment/s 24 may be triggered by each l-th pulse 14ⱼ of the pulse train 13, i.e. the pulse generator 15 may serve as a "system clock" triggering both the pixel retrieval, modulation and display as well as the pixel transfer from the processor 21 to the buffer 16. A pulse counter 25 may count 1 pulses 14ⱼ each and then trigger the transfer. The number 1 may, e.g., be the number of pixels Pᵢ of the image 2 or a half, a third, etc. of that number, to transfer one segment 24 per whole, half, third, etc. image ("frame") 2.

Alternatively, the segment transfer may be triggered by the mirror driver 9 (see broken arrow 26) to transfer segments 24 in synchronicity with the mirror position POS, e.g., every vertical or horizontal oscillation period Tᵥ, Tₕ, or by the buffer 16 each time a filling level of the buffer 16 falls below a predetermined threshold (see arrow 27), or every k-th cycle of the clock of the processor 21, etc.

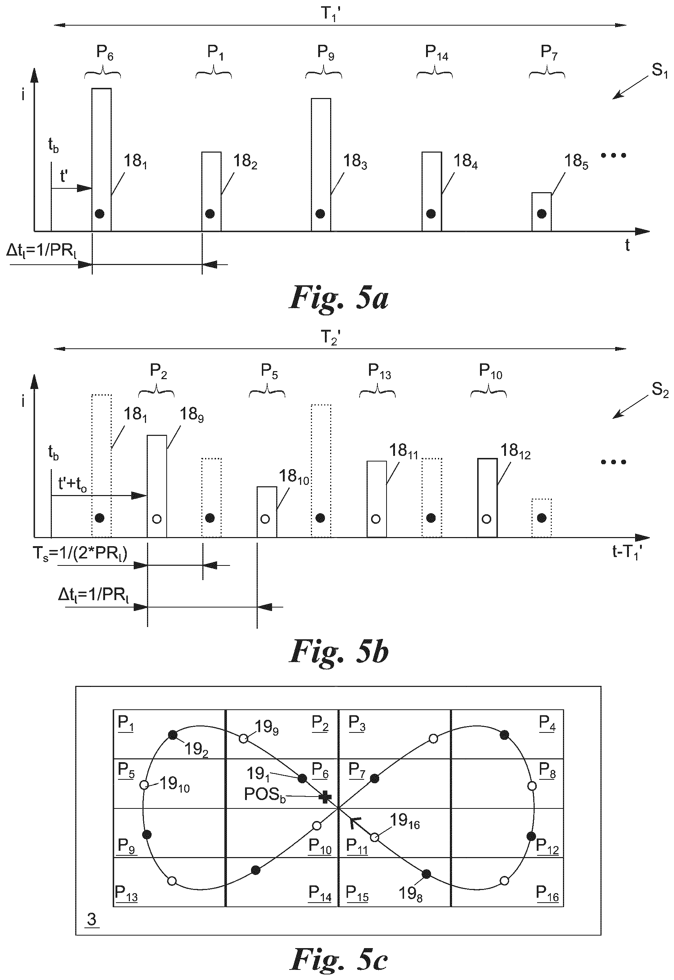

An interlacing of the pixels Pᵢ for achieving a particularly low brightness shall now be described with reference to Figs. 5a - 5c.

Here, the low pulse rate PRₗ is less than the inverse of the shortest duration of stay of the light beam 4 in one pixel Pᵢ of the image 2 when the light beam 4 is scanned across the image 2 according to the scan pattern 5 (here: the pixel P₆). Hence, the light pulses 19ⱼ within one scan (run) of the scan pattern 5 do not display each pixel Pᵢ but leave out pixels, i.e. leave "holes", see the pixels Pᵢ with an empty circle in the first scan or run of the scan pattern 5 in Fig. 5c.

In the embodiment shown in Figs. 5a - 5c, the low pulse rate PRₗ is half of the duration of stay Tₛ of the light beam 4 in one pixel Pᵢ of the image 2, leading to the holes shown in Fig. 5c. As the duration of stay Tₛ typically varies from pixel Pᵢ to pixel Pᵢ the low pulse rate PRₗ will vary accordingly for each "one pixel Pᵢ". For the sake of simplicity, however, Figs. 5a and 5b depict a scenario with a uniform duration of stay Tₛ.

In a first time interval T₁' of Fig. 5a corresponding to the first scan ("run") of the scan pattern 5 a first section S₁ of the pulse train 17 containing the pulses 18₁ - 18₈ and the corresponding light pulses 19₁ - 19₈ (shown as filled circles in Figs. 5a - 5c) are played out for displaying every second pixel Pᵢ along the scan pattern 5, here: a first pixel succession P₆ -> P₁ -> P₉ -> P₁₄ -> P₇ -> P₄ -> P₁₂ -> P₁₅.

To fill the holes (empty circles) by interlacing, in a second time interval T₂' of Fig. 5b corresponding to a second scan of the scan pattern 5 a second section S₂ of the pulse train 17 containing the pulses 18₉ - 18₁₆ of the train 17 and the corresponding light pulses 19₉ - 19₁₆ (shown as empty circles in Figs. 5b - 5c) are played out for displaying every other second pixel Pᵢ along the scan pattern 5, here: a second pixel succession P₂ -> P₅ -> P₁₃ -> P₁₀ -> P₃ -> P₈ -> P₁₆ -> P₁₁.

The interlacing of the second pixel succession with the first pixel succession on the image area 3 is achieved by offsetting the pixel sections S₁, S₂ of the pulse train 17 with respect to the beginning t_{b} of the respective first and second scans of the scan pattern 5, e.g., by offsetting the pulse train 13 by the pulse generator 15 and/or the modulated pulse train 17 by the controller 12 and/or the mirror movement by the mirror driver 9, etc. In the example of Figs. 5a - 5c, the beginning t_{b} of each scan pattern 5 corresponds to a position POS_{b} of the scan pattern 5 in pixel P₆ on the image area 3, the first section S₁ is offset from the beginning t_{b} by t' and the second section S₂ is offset from the beginning t_{b} by t' + tₒ, wherein tₒ is a half of the pulse time spacing Δtₗ, i.e. half of the inverse of the low pulse rate PRₗ. Hence, the first section S₁ is offset with respect to the second section S₂ by Δtₗ/2, when the first and second scans of the scan pattern 5 are put on top of each other as done in Fig. 5b.

Within the first scan of the scan pattern 5 during the first time interval T₁' only the pixels Pᵢ of the first section S₁ are required in the buffer 16 for modulating the pulse train 13, and within the second scan of the scan pattern 5 during the second time interval T₂' only the pixels Pᵢ of the second section S₂ are required in the buffer 16 for modulating the pulse train 13. The processor 21 may thus transfer in (at least) one segment 24 per scan (run) of the scan pattern 5 only those pixels Pᵢ that are actuals required in the near future. For instance, the processor 21 may transfer the pixels Pᵢ of the next scan of the scan pattern 5 at the end of each current scan of the scan pattern 5.

Instead of a "two-fold" interlacing of two sections S₁, S₂ as shown in Figs. 5a - 5c an "m-fold" interlacing of more than two, e.g., three, four, five, etc. sections S₁, S₂, ..., Sₘ may be employed by mutually offsetting these m sections S₁, S₂, ..., Sₘ with respect to the beginning t_{b} of each scan of the scan pattern 5 by a positive or negative integer multiple n (n = 1, 2, 3, ...) of an m-th (m = 2, 3, 4, ...) of the inverse of the low pulse rate PRₗ when the low pulse rate PRₗ is an m-th of the inverse of the duration of stay Tₛ in one pixel Pᵢ. "n modulo m" should be unequal to zero (n mod m ≠ 0) to prevent an overlapping of the pulses 18ⱼ of different sections.

Optionally, in an embodiment with an m-fold interlacing, the processor 21 may transfer (at least) one segment 24 per scan of the scan pattern 5 such that the buffer 16 only needs to store the pixels Pᵢ of the current (optionally: the current and one or more subsequent) scans of the scan pattern 5.

Fig. 6 illustrates a determination of the sequence 23 of pixels Pᵢ used for the two-fold interlacing of Figs. 5a - 5c as performed by the processor 21. A pre-calculated look-up table 28 holds indices i of the pixels Pᵢ to be successively displayed according to the scan pattern 5. The index i of a pixel Pᵢ indicates the position of that pixel Pᵢ within the image 2, and via that position its memory address in the memory 22. Each index i may, for instance, be an integer, e.g., i = 14 indicating that pixel P₁₄ is the 14^{th} in the image 2, or a composite index such as, e.g., i = (2,3) indicating that pixel P_{2,3} is in the 2^{nd} row and 3^{rd} column of the image 2, or a (hexadecimal) memory address i = (0x123456) indicating that pixel P₀ₓ₁₂₃₄₅₆ is held at the memory address 0x123456, etc.

The look-up table 28 reproduces the Lissajous pattern 5 running over the image 2 and holds, for each of the pixels Pᵢ as they are subsequently passed (scanned) by the scan pattern 5, the corresponding pixel index i, here: the indices of the pixels Pᵢ of the first section S₁ or first succession in a first sub-table 28₁ and the indices of the pixels Pᵢ of the second section S₂ or second succession in a second sub-table 28₂. Hence, the processor 21 can determine the sequence 23 of pixels Pᵢ by retrieving, pixel-for-pixel, the pixels Pᵢ from the memory addresses indicated by the indices i of the look-up table 28.

In the example of Fig. 6 the processor 21 looks-up the first index i = 6 in the look-up table 28₁, which is the index i of pixel P₆ to be played out at the beginning position POS_{b} within the Lissajous pattern 5, then retrieves pixel P₆ from the memory address corresponding to the pixel index i = 6 (see arrow 29) and puts it as first pixel into the sequence 23 (arrow 30). Then the processor 21 looks-up the second pixel index i = 1 in the look-up table 28₁, which is the index i of pixel P₁ to be played out next within the Lissajous pattern 5, retrieves pixel P₁ from the memory address corresponding to the pixel index i = 1 and appends it as second pixel P₁ to the sequence 23, and so on and so forth to determine the sequence 23. In this way, the processor 21 samples by means of the look-up table 28 the image 2 according to the Lissajous pattern 5 to determine the sequence 23. By splitting the look-up-table 28 in one sub-table 28₁, 28₂ per section S₁, S₂ or pixel succession, the processor 21 needs to access only one short look-up-table 28₁, 28₂ per scan of the scan pattern 5. Alternatively, one long look-up table 28 may be used for several scans.

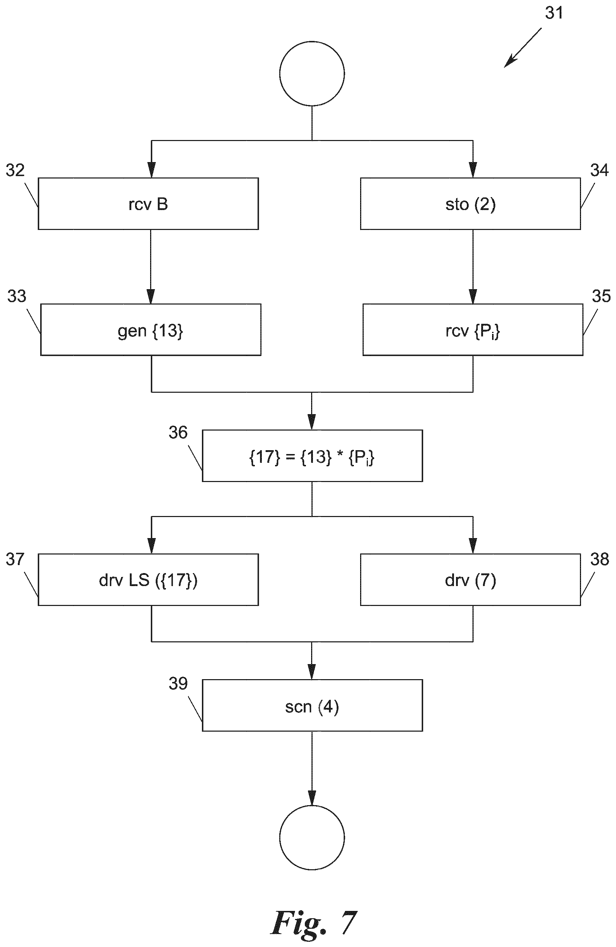

Fig. 7 shows a method 31 for displaying the pixels Pᵢ of the image 2. The method 31 may be carried out by the display apparatus 1 as described above and comprises at least the following steps 32 - 39.

In a first step 32 the pulse generator 15 receives the brightness signal B, e.g. from a user input or the brightness sensor 20.

In a second step 33 the pulse generator 15 generates the pulse train 13 with the low pulse rate PRₗ when the brightness signal B indicates a low brightness or with the high pulse rate PRₕ when the brightness signal B indicates a high brightness.

In a third step 34 the pixels Pᵢ of the image 2 are stored in the buffer 16.

In a fourth step 35 the controller 12 successively receives the pixels Pᵢ stored in the buffer 16, e.g. by retrieving the pixels Pᵢ itself or by being fed by a buffer controller of the buffer 16.

As shown in Fig. 7, the steps 32, 33 and 34, 35 may be carried out in any order, as long as each pixel Pᵢ is received in the controller 12 when the respective pulse 14ⱼ of the generated pulse train 13 is received by the controller 12.

In a fifth step 36 the controller 12 modulates the pulse train 13 in pulse amplitude and/or pulse width according to the received pixels Pᵢ.

In a sixth step 37 the controller 12 drives the light source 6 according to the modulated pulse train 17 to emit the light beam 4.

Concurrently, in step 38 the mirror driver 9 drives the mirror assembly 7 to oscillate according to the scan pattern 5, so that the mirror assembly 7 scans the light beam 4 over the image area 3 according to the scan pattern 5 (step 39).

Optionally, step 32 may be repeated to receive at least one further brightness signal B and, in case the brightness signal B indicates a different brightness, to generate the pulse train 13 with a different pulse rate PR in step 33.

The invention is not restricted to the specific embodiments described above but encompasses all variants, modifications and combinations thereof that fall within the scope of the appended claims.

## Claims

1. Display apparatus, comprising
a light source (6) configured to emit a light beam (4);
a pulse generator (15) configured to generate a pulse train (13) having a pulse rate (PR);
a buffer (16) configured to store pixels (Pᵢ) of an image (2) ;
a controller (12) configured to receive the pulse train (13) and the stored pixels (Pᵢ), to modulate the pulse train (13) in pulse amplitude (A) and/or pulse width according to the pixels (Pᵢ), and to drive the light source (4) according to the modulated pulse train (17);
a mirror assembly (7) with one or more mirrors (8) configured to oscillate and scan the light beam (4) over an image area (3) according to a scan pattern (5); and
a mirror driver (9) configured to drive the mirror assembly (7) according to said scan pattern (5);
**characterised in that**
the pulse generator (15) is configured to receive a brightness signal (B) from an ambient light sensor (20) or a user operated brightness control and to generate the pulse train (13) with a low pulse rate (PRₗ) when the brightness signal (B) indicates a low brightness and with a high pulse rate (PRₕ) when the brightness signal (B) indicates a high brightness, in order to adapt the display apparatus (1) to variable ambient lighting conditions or user preferences.

2. The display apparatus according to claim 1, wherein the scan pattern is a Lissajous pattern (5).

3. The display apparatus according to claim 1 or 2, wherein the controller (12) or the buffer (16) is configured to receive a current position (POS) of the mirror assembly (7) within the scan pattern (5) from the mirror driver (9) and to retrieve that stored pixel (Pᵢ) that corresponds to the current position (POS) from the buffer (16) for modulating.

4. The display apparatus according to any one of claims 1 to 3, further comprising a processor (21) configured to hold the image (2) in a memory (22), to determine a sequence (23) of pixels (Pᵢ) of the image (2) to be successively displayed according to said scan pattern (5), and to transfer said sequence (23) of pixels (Pᵢ) in one or more successive segments (24) to the buffer (16) for storing.

5. The display apparatus according to claim 4, wherein the transferring of said segment/s (24) is triggered by each 1-th pulse (14ⱼ) of the pulse train (13).

6. The display apparatus according to claim 4 or 5, wherein the processor (21) is configured to determine the sequence (23) of pixels (Pᵢ) in successive parts (23ₚ), each part (23ₚ) preferably comprising at least one segment (24).

7. The display apparatus according to any one of claims 4 to 6, wherein the processor (21) is configured to store a look-up table (28) of indices (i) of the pixels (Pᵢ) to be successively displayed according to said scan pattern (5) and to determine the sequence (23) of pixels (Pᵢ) by retrieving the pixels (Pᵢ) according to the look-up table (28) from the memory (22).

8. The display apparatus according to any one of claims 1 to 7, wherein the high pulse rate (PRₕ) is at least twice of the inverse of the shortest duration of stay of the light beam (4) in one pixel (Pᵢ) of said image (2) when scanning the light beam (4) according to the scan pattern (5).

9. The display apparatus according to any one of claims 1 to 8, wherein the low pulse rate (PRₗ) is less than the inverse of the shortest duration of stay of the light beam (4) in one pixel (Pᵢ) of said image (2) when scanning the light beam (4) according to the scan pattern (5).

10. The display apparatus according to claim 9, wherein the low pulse rate (PRₗ) is an m-th of the inverse of the duration of stay (Tₛ) of the light beam (4) in one pixel (Pᵢ) of said image (2) when scanning the light beam (4) according to the scan pattern (5), and wherein m successive sections (S₁, S₂) of the pulse train (17) each containing pulses (18ⱼ) of a respective scan of the scan pattern (5) are mutually offset in time with respect to the beginning (t_{b}) of the respective scan of the scan pattern (5) by an integer multiple n of an m-th of the inverse of the low pulse rate (PRₗ), n modulo m being unequal to zero.

11. The display apparatus according to claim 9 or 10 each in combination with claim 4, wherein the processor (21) is configured to transfer at least one segment (24) per scan of the scan pattern (5).

12. The display apparatus according to any one of claims 1 to 11, wherein each pixel (Pᵢ) has two or more colours, preferably the colours red, green and blue,
wherein the light source (4) comprises for each of said colours a sub-light source configured to emit a respective sub-light beam of the respective colour, and
wherein the controller (12) is configured to perform said modulating and driving separately for each of said colours.

13. A method for displaying pixels of an image, comprising
by means of a pulse generator (15), generating a pulse train (13) having a pulse rate (PR)
storing (34) said pixels (Pᵢ) in a buffer (16);
receiving (35) the stored pixels (Pᵢ) successively in a controller (12);
by means of the controller (12), modulating (36) the pulse train (13) in pulse amplitude (A) and/or pulse width according to the received pixels (Pᵢ) and driving (37) a light source (4) according to the modulated pulse train (17) to emit a light beam (4) ;
driving (38), by means of a mirror driver (9), a mirror assembly (7) with one or more mirrors (8) to oscillate according to a scan pattern (5); and
scanning (39), by means of the mirror assembly (7), the light beam (4) over an image area (3) according to said scan pattern (5)
**characterized by**,
by means of said pulse generator, receiving (32) a brightness signal (B) from an ambient light sensor (20) or a user operated brightness control and generating (33) the pulse train (13) with a low pulse rate (PR1 ) when the brightness signal (B) indicates a low brightness and with a high pulse rate (PRh ) when the brightness signal (B) indicates a high brightness, to adapt the displaying to variable ambient lighting conditions or user preferences;

14. The method according to claim 13, wherein the high pulse rate (PRₕ) is at least twice of the inverse of the shortest duration of stay of the light beam (4) in one pixel (Pᵢ) of said image (2) when scanning the light beam (4) according to the scan pattern (5).

15. The method according to claim 13 or 14, wherein the low pulse rate (PRₗ) is less than the inverse of the shortest duration of stay of the light beam (4) in one pixel (Pᵢ) of said image (2) when scanning the light beam (4) according to the scan pattern (5).

## Patentansprüche

1. Anzeigevorrichtung, umfassend
eine Lichtquelle (6), die dazu ausgebildet ist, einen Lichtstrahl (4) auszusenden;
einen Pulsgenerator (15), der dazu ausgebildet ist, einen Pulszug (13) mit einer Pulsrate (PR) zu erzeugen;
einen Pufferspeicher (16), der dazu ausgebildet ist, Pixel (Pᵢ) eines Bildes (2) zu speichern;
eine Steuerung (12), die dazu ausgebildet ist, den Pulszug (13) und die gespeicherten Pixel (Pᵢ) zu empfangen, den Pulszug (13) in Pulsamplitude (A) und/oder Pulsbreite gemäß den Pixeln (Pᵢ) zu modulieren und die Lichtquelle (4) gemäß dem modulierten Pulszug (17) anzusteuern;
eine Spiegelanordnung (7) mit einem oder mehreren Spiegeln (8), die dazu ausgebildet ist, zu oszillieren und den Lichtstrahl (4) gemäß einem Scanmuster (5) über einen Bildbereich (3) zu scannen; und
einen Spiegelantrieb (9), der dazu ausgebildet ist, die Spiegelanordnung (7) gemäß dem genannten Scanmuster (5) anzusteuern;
**dadurch gekennzeichnet, dass**
der Pulsgenerator (15) dazu ausgebildet ist, ein Helligkeitssignal (B) von einem Umgebungslichtsensor (20) oder von einer benutzerbedienten Helligkeitssteuerung zu empfangen und den Pulszug (13) mit einer niedrigen Pulsrate (PRₗ) zu erzeugen, wenn das Helligkeitssignal (B) eine niedrige Helligkeit angibt, und mit einer hohen Pulsrate (PRₕ), wenn das Helligkeitssignal (B) eine hohe Helligkeit angibt, um die Anzeigevorrichtung (1) an variable Umgebungslichtbedingungen oder Benutzerpräferenzen anzupassen.

2. Anzeigevorrichtung nach Anspruch 1, wobei das Scanmuster ein Lissajous-Muster (5) ist.

3. Anzeigevorrichtung nach Anspruch 1 oder 2, wobei die Steuerung (12) oder der Pufferspeicher (16) dazu ausgebildet ist, eine aktuelle Position (POS) der Spiegelanordnung (7) innerhalb des Scanmusters (5) vom Spiegelantrieb (9) zu empfangen und jenen gespeicherten Pixel (Pᵢ) aus dem Pufferspeicher (16) zur Modulation abzurufen, welcher der aktuellen Position (POS) entspricht.

4. Anzeigevorrichtung nach einem der Ansprüche 1 bis 3, welche ferner einen Prozessor (21) umfasst, der dazu ausgebildet ist, das Bild (2) in einem Speicher (22) zu halten, eine Sequenz (23) von Pixeln (Pᵢ) des Bildes (2) zu ermitteln, welche gemäß dem genannten Scanmuster (5) nacheinander angezeigt werden sollen, und die genannte Sequenz (23) von Pixeln (Pᵢ) in einem oder mehreren aufeinanderfolgenden Segmenten (24) an den Pufferspeicher (16) zum Speichern zu übertragen.

5. Anzeigevorrichtung nach Anspruch 4, wobei das Übertragen des genannten Segments/der genannten Segmente (24) durch jeden l-ten Puls (14ⱼ) des Pulszugs (13) ausgelöst wird.

6. Anzeigevorrichtung nach Anspruch 4 oder 5, wobei der Prozessor (21) dazu ausgebildet ist, die Sequenz (23) von Pixeln (Pᵢ) in aufeinanderfolgenden Teilen (23ₚ) zu ermitteln, wobei jeder Teil (23ₚ) bevorzugt zumindest ein Segment (24) umfasst.

7. Anzeigevorrichtung nach einem der Ansprüche 4 bis 6, wobei der Prozessor (21) dazu ausgebildet ist, eine Lookup-Tabelle (28) von Indizes (i) der Pixel (Pᵢ) zu speichern, welche gemäß dem genannten Scanmuster (5) nacheinander angezeigt werden sollen, und die Sequenz (23) von Pixeln (Pᵢ) durch Abrufen der Pixel (Pᵢ) gemäß der Lookup-Tabelle (28) aus dem Speicher (22) zu ermitteln.

8. Anzeigevorrichtung nach einem der Ansprüche 1 bis 7, wobei die hohe Pulsrate (PRₕ) zumindest doppelt so groß wie der Kehrwert der kürzesten Verweildauer des Lichtstrahls (4) in einem Pixel (Pᵢ) des genannten Bildes (2) beim Scannen des Lichtstrahls (4) gemäß dem Scanmuster (5) ist.

9. Anzeigevorrichtung nach einem der Ansprüche 1 bis 8, wobei die niedrige Pulsrate (PRₗ) kleiner als der Kehrwert der kürzesten Verweildauer des Lichtstrahls (4) in einem Pixel (Pᵢ) des genannten Bildes (2) beim Scannen des Lichtstrahls (4) gemäß dem Scanmuster (5) ist.

10. Anzeigevorrichtung nach Anspruch 9, wobei die niedrige Pulsrate (PRₗ) ein m-tel des Kehrwerts der Verweildauer (Tₛ) des Lichtstrahls (4) in einem Pixel (Pᵢ) des genannten Bildes (2) beim Scannen des Lichtstrahls (4) gemäß dem Scanmuster (5) ist, und wobei m aufeinanderfolgende Abschnitte (S₁, S₂) des Pulszugs (17), welche jeweils Pulse (18ⱼ) eines jeweiligen Scans des Scanmusters (5) enthalten, zeitlich gegeneinander relativ zum Beginn (t_{b}) des jeweiligen Scans des Scanmusters (5) um ein ganzzahliges Vielfaches n eines m-tels des Kehrwerts der niedrigen Pulsrate (PRₗ) versetzt sind, wobei n modulo m ungleich Null ist.

11. Anzeigevorrichtung nach Anspruch 9 oder 10 jeweils in Kombination mit Anspruch 4, wobei der Prozessor (21) dazu ausgebildet ist, zumindest ein Segment (24) pro Scan des Scanmusters (5) zu übertragen.

12. Anzeigevorrichtung nach einem der Ansprüche 1 bis 11, wobei jedes Pixel (Pᵢ) zwei oder mehr Farben hat, bevorzugt die Farben Rot, Grün und Blau,
wobei die Lichtquelle (4) für jede der genannten Farben eine Teil-Lichtquelle umfasst, die dazu ausgebildet ist, einen jeweiligen Teil-Lichtstrahl der jeweiligen Farbe auszusenden, und
wobei die Steuerung (12) dazu ausgebildet ist, das genannte Modulieren und Ansteuern für jede der genannten Farben separat durchzuführen.

13. Verfahren zum Anzeigen von Pixeln eines Bildes, umfassend
mithilfe eines Pulsgenerators (15), Erzeugen eines Pulszugs (13) mit einer Pulsrate (PR);
Speichern (34) der genannten Pixel (Pᵢ) in einem Pufferspeicher (16);
nacheinander Empfangen (35) der gespeicherten Pixel (Pᵢ) in einer Steuerung (12);
mithilfe der Steuerung (12), Modulieren (36) des Pulszugs (13) in Pulsamplitude (A) und/oder Pulsbreite gemäß den empfangenen Pixeln (Pᵢ) und Ansteuern (37) einer Lichtquelle (4) gemäß dem modulierten Pulszug (17), um einen Lichtstrahl (4) auszusenden;
mithilfe eines Spiegelantriebs (9), Ansteuern (38) einer Spiegelanordnung (7) mit einem oder mehreren Spiegeln (8), um gemäß einem Scanmuster (5) zu oszillieren; und
mithilfe der Spiegelanordnung (7), Scannen (39) des Lichtstrahls (4) gemäß dem genannten Scanmuster (5) über einen Bildbereich (3),
**gekennzeichnet durch**
mithilfe des Pulsgenerators, Empfangen (32) eines Helligkeitssignals (B) von einem Umgebungslichtsensor (20) oder einer benutzerbedienten Helligkeitssteuerung und Erzeugen (33) des Pulszugs (13) mit einer niedrigen Pulsrate (PRₗ), wenn das Helligkeitssignal (B) eine niedrige Helligkeit angibt, und mit einer hohen Pulsrate (PRₕ), wenn das Helligkeitssignal (B) eine hohe Helligkeit angibt, um das Anzeigen an variable Umgebungslichtbedingungen oder Benutzerpräferenzen anzupassen.

14. Verfahren nach Anspruch 13, wobei die hohe Pulsrate (PRₕ) zumindest doppelt so groß wie der Kehrwert der kürzesten Verweildauer des Lichtstrahls (4) in einem Pixel (Pᵢ) des genannten Bildes (2) beim Scannen des Lichtstrahls (4) gemäß dem Scanmuster (5) ist.

15. Verfahren nach Anspruch 13 oder 14, wobei die niedrige Pulsrate (PRₗ) kleiner als der Kehrwert der kürzesten Verweildauer des Lichtstrahls (4) in einem Pixel (Pᵢ) des genannten Bildes (2) beim Scannen des Lichtstrahls (4) gemäß dem Scanmuster (5) ist.

## Revendications

1. Appareil d'affichage, comprenant
une source lumineuse (6) conçue pour émettre un faisceau lumineux (4) ;
un générateur d'impulsions (15) conçu pour générer un train d'impulsions (13) ayant une fréquence d'impulsion (PR) ;
un tampon (16) conçu pour stocker des pixels (Pᵢ) d'une image (2) ;
un contrôleur (12) conçu pour recevoir le train d'impulsions (13) et les pixels (Pᵢ) stockés, pour moduler le train d'impulsions (13) en amplitude d'impulsion (A) et/ou en largeur d'impulsion en fonction des pixels (Pᵢ), et pour commander la source lumineuse (4) en fonction du train d'impulsions modulé (17) ;
un ensemble miroir (7) avec un ou plusieurs miroirs (8) conçu pour osciller et balayer le faisceau lumineux (4) sur une surface d'image (3) en fonction d'un motif de balayage (5) ; et
une commande de miroir (9) conçue pour commander l'ensemble miroir (7) en fonction dudit motif de balayage (5) ;
**caractérisé en ce que**
le générateur d'impulsions (15) est conçu pour recevoir un signal de luminosité (B) à partir d'un capteur de lumière ambiante (20) ou d'un dispositif de réglage de luminosité actionnée par un utilisateur et pour générer le train d'impulsions (13) avec une faible fréquence d'impulsion (PRₗ) lorsque le signal de luminosité (B) indique une faible luminosité et avec une fréquence d'impulsion élevée (PRₕ) lorsque le signal de luminosité (B) indique une luminosité élevée, afin d'adapter l'appareil d'affichage (1) à des conditions d'éclairage ambiant variables ou à des préférences de l'utilisateur.

2. Appareil d'affichage selon la revendication 1, dans lequel le motif de balayage est un motif de Lissajous (5).

3. Appareil d'affichage selon la revendication 1 ou 2, dans lequel le contrôleur (12) ou le tampon (16) est conçu pour recevoir une position actuelle (POS) de l'ensemble miroir (7) au sein du motif de balayage (5) à partir de la commande de miroir (9) et pour récupérer le pixel (Pᵢ) stocké qui correspond à la position actuelle (POS) à partir du tampon (16) pour la modulation.

4. Appareil d'affichage selon l'une quelconque des revendications 1 à 3, comprenant en outre un processeur (21) conçu pour maintenir l'image (2) dans une mémoire (22), pour déterminer une séquence (23) de pixels (Pᵢ) de l'image (2) devant être affichés successivement en fonction dudit motif de balayage (5), et pour transférer ladite séquence (23) de pixels (Pᵢ) en un ou plusieurs segments successifs (24) au tampon (16) pour le stockage.

5. Appareil d'affichage selon la revendication 4, dans lequel le transfert dudit/desdites segment/s (24) est déclenché par chaque l-ième impulsion (14ⱼ) du train d'impulsions (13).

6. Appareil d'affichage selon la revendication 4 ou 5, dans lequel le processeur (21) est conçu pour déterminer la séquence (23) de pixels (Pᵢ) par parties successives (23ₚ), chaque partie (23ₚ) comprenant de préférence au moins un segment (24).

7. Appareil d'affichage selon l'une quelconque des revendications 4 à 6, dans lequel le processeur (21) est conçu pour stocker une table de correspondance (28) d'indices (i) des pixels (Pᵢ) devant être affichés successivement en fonction dudit motif de balayage (5) et pour déterminer la séquence (23) de pixels (Pᵢ) en récupérant les pixels (Pᵢ) en fonction de la table de correspondance (28) depuis la mémoire (22).

8. Appareil d'affichage selon l'une quelconque des revendications 1 à 7, dans lequel la fréquence d'impulsion élevée (PRₕ) est au moins le double de l'inverse de la durée de séjour la plus courte du faisceau lumineux (4) dans un pixel (Pᵢ) de ladite image (2) lors du balayage du faisceau lumineux (4) en fonction du motif de balayage (5).

9. Appareil d'affichage selon l'une quelconque des revendications 1 à 8, dans lequel la faible fréquence d'impulsion (PRₗ) est inférieure à l'inverse de la durée de séjour la plus courte du faisceau lumineux (4) dans un pixel (Pᵢ) de ladite image (2) lors du balayage du faisceau lumineux (4) en fonction du motif de balayage (5).

10. Appareil d'affichage selon la revendication 9, dans lequel la faible fréquence d'impulsion (PRₗ) est un m-ième de l'inverse de la durée de séjour (Tₛ) du faisceau lumineux (4) dans un pixel (Pᵢ) de ladite image (2) lors du balayage du faisceau lumineux (4) en fonction du motif de balayage (5), et dans lequel m sections successives (S₁, S₂) du train d'impulsions (17), chacune contenant des impulsions (18ⱼ) d'un balayage respectif du motif de balayage (5), sont mutuellement décalées dans le temps par rapport au début (t_{b}) du balayage respectif du motif de balayage (5) d'un multiple entier n d'un m-ième de l'inverse de la faible fréquence d'impulsion (PRₗ), n modulo m étant différent de zéro.

11. Appareil d'affichage selon la revendication 9 ou 10, chacune en association avec la revendication 4, dans lequel le processeur (21) est conçu pour transférer au moins un segment (24) par balayage du motif de balayage (5).

12. Appareil d'affichage selon l'une quelconque des revendications 1 à 11, dans lequel chaque pixel (Pᵢ) a deux couleurs ou plus, de préférence les couleurs rouge, vert et bleu,
dans lequel la source lumineuse (4) comprend pour chacune desdites couleurs une sous-source lumineuse conçue pour émettre un sous-faisceau lumineux respectif de la couleur respective, et
dans lequel le contrôleur (12) est conçu pour réaliser ladite modulation et ladite commande séparément pour chacune desdites couleurs.

13. Procédé d'affichage de pixels d'une image, comprenant
au moyen d'un générateur d'impulsions (15), la génération d'un train d'impulsions (13) ayant une fréquence d'impulsion (PR) ;
le stockage (34) desdits pixels (Pᵢ) dans un tampon (16) ;
la réception (35) successive des pixels (Pᵢ) stockés dans un contrôleur (12) ;
au moyen du contrôleur (12), la modulation (36) du train d'impulsions (13) en amplitude d'impulsion (A) et/ou en largeur d'impulsion en fonction des pixels (Pᵢ) reçus et la commande (37) d'une source lumineuse (4) en fonction du train d'impulsions modulé (17) pour émettre un faisceau lumineux (4) ;
la commande (38), au moyen d'une commande de miroir (9), d'un ensemble miroir (7) avec un ou plusieurs miroirs (8) pour osciller en fonction d'un motif de balayage (5) ; et
le balayage (39), au moyen de l'ensemble miroir (7), du faisceau lumineux (4) sur une zone d'image (3) en fonction dudit motif de balayage (5)
**caractérisé par**,
au moyen dudit générateur d'impulsions, la réception (32) d'un signal de luminosité (B) à partir d'un capteur de lumière ambiante (20) ou d'un dispositif de réglage de luminosité actionnée par un utilisateur et la génération (33) du train d'impulsions (13) avec une faible fréquence d'impulsion (PRₗ) lorsque le signal de luminosité (B) indique une faible luminosité et avec une fréquence d'impulsion élevée (PRₕ) lorsque le signal de luminosité (B) indique une luminosité élevée, pour adapter l'affichage à des conditions d'éclairage ambiant variables ou à des préférences de l'utilisateur.

14. Procédé selon la revendication 13, dans lequel la fréquence d'impulsion élevée (PRₕ) est au moins le double de l'inverse de la durée de séjour la plus courte du faisceau lumineux (4) dans un pixel (Pᵢ) de ladite image (2) lors du balayage du faisceau lumineux (4) en fonction du motif de balayage (5).

15. Procédé selon la revendication 13 ou 14, dans lequel la faible fréquence d'impulsion (PRₗ) est inférieure à l'inverse de la durée de séjour la plus courte du faisceau lumineux (4) dans un pixel (Pᵢ) de ladite image (2) lors du balayage du faisceau de lumière (4) en fonction du motif de balayage (5).
